# EUROPÄISCHE PATENTSCHRIFT

(11) **EP 2 567 034 B1**
(45) Veröffentlichungstag und Bekanntmachung des Hinweises auf die Patenterteilung: **19.08.2015**
(21) Anmeldenummer: 11717451.6
(22) Anmeldetag: 25.03.2011
(51) Int. Cl.: F28F 9/013, F28F 9/00, F16J 15/06

(54) **VORRICHTUNG ZUM HERMETISCHEN VERSCHLIEßEN VON GROßEN ÖFFNUNGEN IN APPARATEN**
DEVICE FOR HERMETICALLY SEALING LARGE OPENINGS IN APPARATUSES
DISPOSITIF DE FERMETURE HERMÉTIQUE DE GRANDES OUVERTURES DANS DES APPAREILS

(30) Priorität: 03.05.2010 AT 7422010
(43) Veröffentlichungstag der Anmeldung: 13.03.2013
(73) Patentinhaber: Andritz Technology and Asset Management GmbH, 8045 Graz (AT)
(72) Erfinder: ZIELKE, Jörg, 88263 Horgenzell (DE); KROEHL, Paul, 88250 Weingarten (DE); STANKE, Klaus, 88250 Weingarten (DE)
(74) Vertreter: Schweinzer, Friedrich
(86) Internationale Anmeldenummer: PCT/AT2011/000149
(87) Internationale Veröffentlichungsnummer: WO 2011/137468

(56) Entgegenhaltungen:
- EP-A1- 0 321 895
- DE-A1-102006 018 557
- FR-A2- 2 286 251
- JP-A- 2001 262 844

## Beschreibung

Die Erfindung betrifft eine Vorrichtung zum hermetischen Verschließen von großen Öffnungen in Apparaten, die mit niedrigem inneren Überdruck beaufschlagt werden.

Für die Abdichtung von Apparateöffnungen werden oblicherweise eingeschweißte, runde Flansche und passende Deckel mit Dichtungen verwendet. Damit sich die Dichtobertlächen nicht verziehen, müssen sie eine erhebliche Materialstärke aufweisen sowie mechanisch bearbeitet sein. Bei Druckbehältern auf mittlerem und hohem Drucknlveau Ist die hohe Materialstärke sowieso aus Festigkeitsgründen des Apparates erforderlich. Bei niedrigem Druckniveau und lufttechnischen Apparaten betragen die Wandstärken nur wenige Millimeter und bieten somit keine Gewähr für eine ausreichende Steifigkeit und Verzugsfreiheit der Dichtflächen, insbesondere bei großen, meist rechteckigen Öffnungsquerschnitten. Große Querschnitte sind beispielsweise erforderlich für Montage- und Zugangsöffnungen, oder für eingebaute Komponenten wie Rührer und Wärmetauscher. Eine Möglichkeit einer Abdichtung von Öffnungen bei niedrigen Drücken ist in der DE 10 2006 018 557 A1 beschrieben. Hier wird ein Deckel mit Dichtleisten versehen, die in entsprechende Dichtleisten am Rahmen einer Öffnung in einem Gebäude angebracht sind, wodurch sich ein Schutz gegen Hochwasser ergibt Derartige Systeme sind aber für Behälter mit Innendruck nicht anwendbar.

Ziel der Erfindung ist es daher eine Vorrichtung zu schaffen, die bei niedrigen Drücken eine einfache, kostengünstige und hermetische Abdichtung gewährleistet.

Die Erfindung ist daher dadurch gekennzeichnet, dass ein Verschlussdeckel (1) vorgesehen ist, der an der Außenseite durch ein U-förmiges Profil (2), das mittels Bolzen (3) mit einer Leiste (4) verbunden ist und den mindestens einen Verschlussdeckel (1) an die Seitenwand (5) des Apparates anpresst, wobei die Bolzen (3) In einer Leiste (4) montiert sind, die am Rand der Öffnung (7) des Apparates auf der Seltenwand (5) des Apparates montiert, insbesondere an die Seitenwand (5) angeschweißt, ist, wobei die Öffnung vorteilhafterweise rechteckig ausgeführt sein kann. Bei Einsatz der erfindungsgemäßen Vorrichtung können die konstruktiv vorgegebenen niedrigen Wandstärken beibehalten und trotzdem eine hermetische Abdichtung erreicht werden. Insbesondere kann auch auf eine aufwändige mechanische Bearbeitung der behälterseitigen Dichtfläche verzichtet werden. Dadurch ergibt sich eine wirtschaftlich vorteilhafte Ausführung des Apparates.

Als besonders günstig hat sich erwiesen, wenn die Leiste mittels U-förmiger Profile auf die Seitenwand gepresst wird. Dadurch wird eine gleichmäßige Anpressung erreicht.

Eine günstige Weiterbildung der Erfindung ist dadurch gekennzeichnet, dass der Verschlussdeckel eine Nut für eine Weichdichtung aufweist. Damit kann eine sehr gute hermetische Abdichtung erreicht werden.

Werden mehrere Öffnungen mit Verschlussdeckeln vorgesehen, ist es besonders vorteilhaft, wenn eng nebeneinander liegende Verschlussdeckel von einem gemeinsamen Profil gespannt werden.

Eine günstige Ausgestaltung der Erfindung ist dadurch gekennzeichnet, dass die Bolzen in die Leiste gesteckt oder geschraubt werden, wobei die Bolzen mit der Leiste verklebt oder verschweißt werden können.

Die Erfindung erweist sich als besonderes vorteilhaft, wenn der Verschlussdeckel Teil eines Wärmetauscherpaketes ist, wobei das Wärmetauscherpaket mit Hilfe von Laufschienen und verstellbaren Aufhängerollen genau ausgerichtet werden kann, dass der Verschlussdeckel planparallel zur Seitenwand steht.

Die Erfindung wird nun anhand der Zeichnungen beispielhaft beschrieben, wobei
Fig. 1 eine Ausführung der Erfindung,
Fig. 2 einen Schnitt gemäß Linie II-II in Fig. 1,
Fig. 3 einen Schnitt gemäß Linie III-III in Fig. 1,
Fig. 4 einen Schnitt durch eine Leiste gemäß der Erfindung und
Fig. 5 eine weitere Ausführungsform gemäß der Erfindung darstellt.

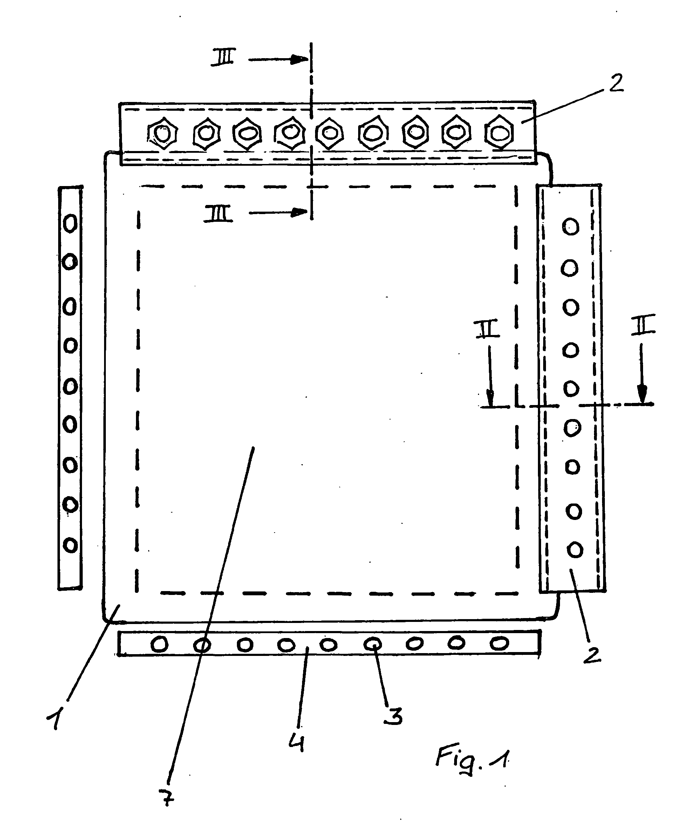

Fig. 1 zeigt einen Verschlussdeckel 1, der mittels U-förmigen Profilen 2 über Bolzen 3, die mit einer Leiste 4 verschweißt sind, auf die Seitenwand 5 gespannt wird. Die Leisten 4 sind am Rand der Öffnungen 7 auf die Seitenwand geschweißt und verstärken dadurch den Dichtungsbereich der Seitenwand. Zusammen mit den U-förmigen Profilen 2 ergibt sich damit eine extrem steife Konstruktion für den Dichtungsbereich.

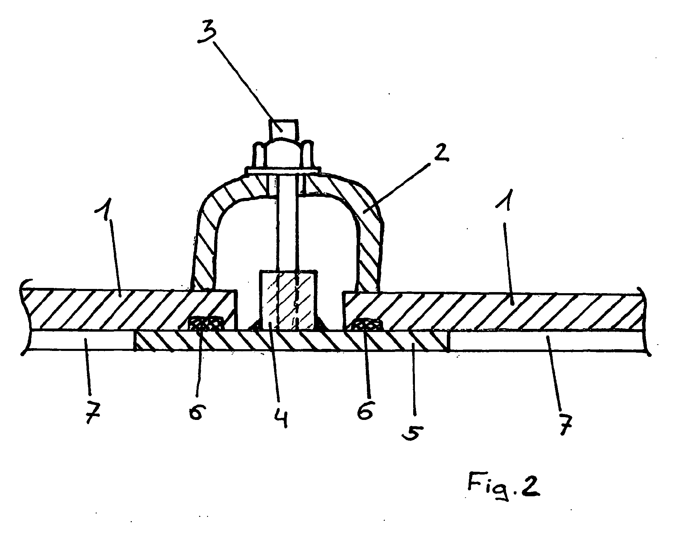

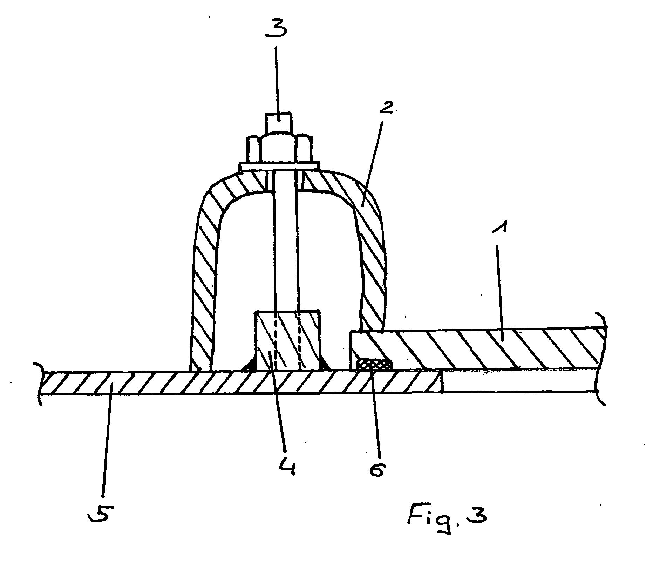

Fig. 2 zeigt einen Schnitt gemäß Linie II-II in Fig. 1, wobei hier zwei Öffnungen 7 erkennbar sind. Die Leiste 4 ist an die Seitenwand 5 des Apparates geschweißt. Zur Dichtung dient ein U-förmiges Profil 2, das mittels Bolzen 3 mit der Leiste 4 verbunden ist und beide Verschlussdeckel 1 an die Seitenwand 5 anpresst. Eine in die umlaufende Deckelnut eingelegte Weichdichtung 6 gleicht noch vorhandene Oberflächenungenauigkeiten aus und sorgt so für eine hermetische Abdichtung der Öffnung(en) 7. Bei nebeneinander liegenden Öffnungen kann die Spannung platzsparend mit einem gemeinsamen U-förmigen Profil 2 erfolgen, welches dann gleich hohe Schenkel aufweist. im Gegensatz dazu sind die Schenkel zur Abspannung direkt auf die Seitenwand 5 ungleich, wie auch in Fig. 3 (Schnitt gemäß Linie III-III in Fig. 1) dargestellt.

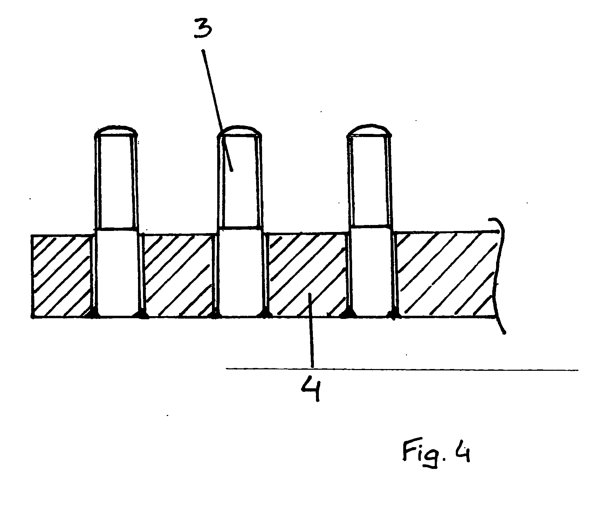

Die Leisten 4 haben die Doppelfunktion Versteifung und Verspannung. Sie weisen vorteilhafterweise einen hohen, mindestens jedoch quadratischen Querschnitt auf. Die Bolzen 3 werden in die Löcher gesteckt oder geschraubt und von der Rückseite verschweißt (siehe Fig. 4). Die Leisten werden nun nach ggf. erforderlicher Richtarbeit durch einfach zu erstellende Kehlnähte auf die Seitenwand geschweißt.

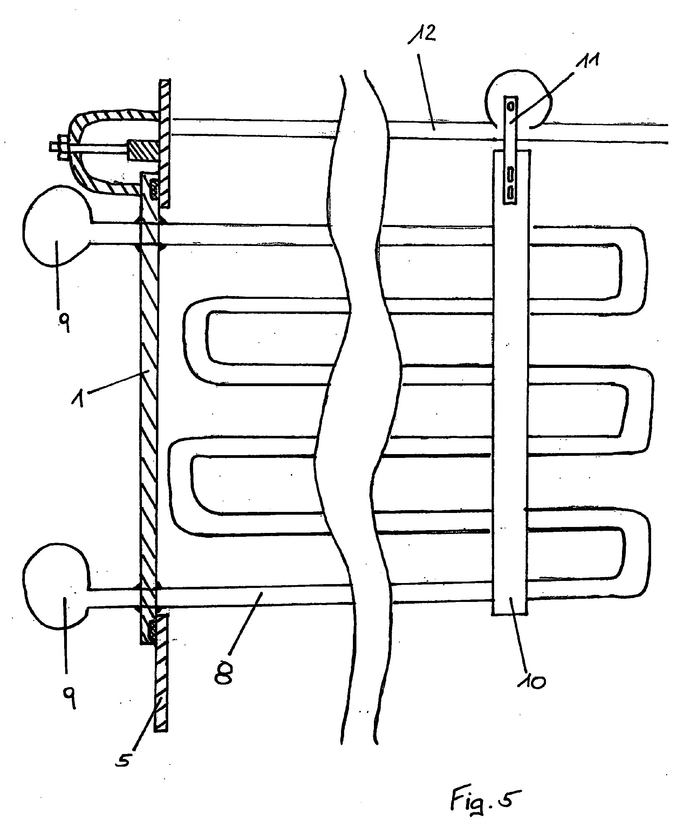

Wenn nicht nur lediglich Öffnungen 7 zu verschließen sind, sondern beispielsweise Wärmetauscherbündel seitlich in den Apparat geschoben werden, sind weitere Maßnahmen erforderlich. Die Wärmetauscher weisen wie in Fig. 5 dargestellt, vorteilhafterweise an ihrem äußeren Ende ebenfalls eine Verschlussplatte 1, wie zuvor beschrieben, auf. Ein- und Auslauf der Rohrschlangen 8 münden in außen gelegene Sammlerrohre 9. Die Durchtritte durch die Verschlussplatte 1 sind dichtgeschweißt. An ihrem inneren Ende sind die Rohrschlangen 8 in einem Halterahmen 10 gefasst. Dieser Halterahmen 10 kann durch (nicht dargestellte) Aussteifungsbleche direkt mit der Verschlussplatte 1 verbunden werden, wodurch sich eine kompakte Einheit ergibt. Bei großen Einschubtiefen ist jedoch auch die erfindungsgemäß verstärkte Seitenwand 5 nicht in der Lage, die biegenden Gewichtskräfte abzufangen. Zur Abhilfe werden die sich gegenüberliegenden Seitenwände mit Laufschienen 12 verbunden, wodurch sich alleine schon eine Verstärkung ergibt. Darüber hinaus wird der Halterahmen 10 des Wärmetauschers über einstellbare Laufrollen 11 an den Laufschienen 12 abgehängt. Nach dem Einschieben des Wärmetauscherpakets in den Apparat kann so die Verschlussplatte 1 planparallel zur Seitenwand 5 ausgerichtet werden und wird damit keinen zusätzlichen, Undichtigkeit verursachenden Biegemomenten ausgesetzt. Die Befestigung und Abdichtung der Verschlussplatte erfolgt wie zuvor beschrieben mittels erfindungsgemäßen U-förmigen Profilen 2 und Bolzenleisten 4.

## Patentansprüche

1. Vorrichtung zum hermetischen Verschließen von großen Öffnungen in Apparaten, die mit niedrigem inneren Überdruck beaufschlagt werden, **dadurch gekennzeichnet, dass** mindestens ein Verschlussdeckel (1) vorgesehen ist, der an der Außenseite durch ein U-förmiges Profil (2), das mittels Bolzen (3) mit einer Leiste (4) verbunden ist und den mindestens einen Verschlussdeckel (1) an die Seitenwand (5) des Apparates anpresst, wobei die Bolzen (3) in einer Leiste (4) montiert sind, die am Rand der Öffnung (7) des Apparates auf der Seitenwand (5) des Apparates montiert, insbesondere an die Seitenwand (5) angeschweißt, ist.

2. Vorrichtung nach Anspruch 1, **dadurch gekennzeichnet, dass** die Öffnungen (7) rechteckig ausgeführt sind.

3. Vorrichtung nach einem der Ansprüche 1 oder 2, **dadurch gekennzeichnet, dass** der Verschlussdeckel (1) eine Nut für eine Weichdichtung (6) aufweist.

4. Vorrichtung nach einem der Ansprüche 1 bis 3, **dadurch gekennzeichnet, dass** mehrere Öffnungen (7) mit Verschlussdeckeln (1) vorgesehen sind, wobei eng nebeneinander liegende Verschlussdeckel (1) von einem gemeinsamen Profil (2) gespannt werden.

5. Vorrichtung nach einem der Ansprüche 1 bis 4, **dadurch gekennzeichnet, dass** die Bolzen (3) in die Leiste (4) gesteckt oder geschraubt werden.

6. Vorrichtung nach Anspruch 5, **dadurch gekennzeichnet, dass** die Bolzen (3) mit der Leiste (4) verklebt oder verschweißt werden.

7. Vorrichtung nach einem der Ansprüche 1 bis 6, **dadurch gekennzeichnet, dass** der Verschlussdeckel (1) Teil eines Wärmetauscherpaketes ist.

8. Vorrichtung nach Anspruch 7, **dadurch gekennzeichnet, dass** das Wärmetauscherpaket mit Hilfe von Laufschienen (12) und verstellbaren Aufhängerollen (11) genau ausgerichtet werden kann, so dass der Verschlussdeckel (1) planparallel zur Seitenwand (5) steht.

## Claims

1. Device to create a hermetic seal for large openings in equipment subject to low pressure on the inside, **characterised by** at least one sealing cover (1) being provided that has a U-shaped profile (2) on the outside, which is connected to a strip (4) by means of bolts (3) and presses the at least one sealing cover (1) onto the side wall (5) of the device, where the bolts (3) are mounted in a strip (4) which is mounted at the edge of the opening (7) of the device on the side wall (5), especially welded to the side wall (5).

2. Device according to Claim 1, **characterised by** the opening (7) having a rectangular shape.

3. Device according to one of Claims 1 or 2, **characterised by** the sealing cover (1) having a groove for a soft seal (6).

4. Device according to one of Claims 1 to 3, **characterised by** several openings (7) with sealing covers (1) being provided, where sealing covers (1) that are close together are clamped to a shared profile (2).

5. Device according to one of Claims 1 to 4, **characterised by** the bolts (3) being pushed or screwed into the strip (4).

6. Device according to Claim 5, **characterised by** the bolts (3) being either glued or welded to the strip (4).

7. Device according to one of Claims 1 to 6, **characterised by** the sealing cover (1) being part of a heat exchanger stack.

8. Device according to Claim 7, **characterised by** the heat exchanger stack being suitable for precise alignment with the aid of running rails (12) and adjustable suspension rollers (11) in such a way that the sealing cover (1) is plane-parallel to the side wall (5).

## Revendications

1. Dispositif de fermeture hermétique pour apertures de grandes dimensions sur des appareils à être soumis à une légère surpression interne, **caractérisé en ce qu'**au moins un couvercle de fermeture (1) qui comporte à son extérieur un profilé en U (2), lequel est connecté à un liston (4) moyennant des goujons (3) et lequel presse le au moins un couvercle de fermeture (1) contre la paroi latérale (5) de l'appareil est prévu, les goujons (3) étant montés sur un liston (4), qui est monté à la paroi latérale (5) au bout de l'aperture (7) de l'appareil, surtout soudé à la paroi latérale (5) de l'appareil.

2. Dispositif selon la revendication 1, **caractérisé en ce que** les apertures (7) sont étudiées en forme rectangulaire.

3. Dispositif selon l'une des revendications 1 ou 2, **caractérisé en ce que** le couvercle de fermeture (1) comporte une rainure pour le placement d'un bourrage souple (6).

4. Dispositif selon l'une des revendications 1 à 3, **caractérisé en ce que** plusieurs apertures (7) avec couvercles de fermeture (1) sont prévues, où des couvercles de fermeture (1) peu espacés l'un de l'autre sont tendus moyennant un profilé (2) commun.

5. Dispositif selon l'une des revendications 1 à 4, **caractérisé en ce que** les goujons (3) sont insérés dans le liston (4) ou vissés à celui-ci.

6. Dispositif selon la revendication 5, **caractérisé en ce que** les goujons (3) sont collés ou soudés au liston (4).

7. Dispositif selon l'une des revendications 1 à 6, **caractérisé en ce que** le couvercle de fermeture (1) appartient à une rangée d'échangeurs de chaleur.

8. Dispositif selon la revendication 7, **caractérisé en ce que** la rangée d'échangeurs de chaleur peut être alignée précisément à l'aide de glissières (12) et de galets de suspension (11) ajustables, de manière que le couvercle de fermeture (1) soit en parallèle et plan par rapport à la paroi latérale (5).
